# EUROPÄISCHE PATENTSCHRIFT

(11) **EP 3 916 184 B1**
(45) Veröffentlichungstag und Bekanntmachung des Hinweises auf die Patenterteilung: **12.06.2024**
(21) Anmeldenummer: 20176870.2
(22) Anmeldetag: 27.05.2020
(51) Int. Cl.: E05F 3/12, F16K 3/24

(54) **TÜRANTRIEB MIT REGULIERVENTIL**
DOOR DRIVE WITH REGULATOR VALVE
ENTRAÎNEMENT DE PORTE AVEC SOUPAPE DE RÉGULATION

(43) Veröffentlichungstag der Anmeldung: 01.12.2021
(73) Patentinhaber: dormakaba Deutschland GmbH, 58256 Ennepetal (DE)
(72) Erfinder: Bruns, Marcus, 58256 Ennepetal (DE)
(74) Vertreter: Balder IP Law, S.L.

(56) Entgegenhaltungen:
- EP-A1- 2 921 625
- EP-A1- 3 263 815
- EP-A2- 2 730 822
- WO-A1-2019/206510
- CN-A- 109 630 721
- CN-A- 110 260 025
- DE-A1-102010 008 167
- DE-B- 1 088 391

## Beschreibung

Die Erfindung betrifft einen Türantrieb mit einem Regulierventil, wobei das Regulierventil eine Rotationsachse aufweist, wobei das Regulierventil wenigstens zwei Enden aufweist, wobei das Regulierventil wenigstens zwei Dichtabschnitte aufweist, wobei das Regulierventil einen Regulierabschnitt aufweist, wobei der Regulierabschnitt zwischen den Dichtabschnitten angeordnet ist.

Die EP3103949 B1 offenbart einen Türantrieb mit einem Gehäuse und wenigstens einem Regulierventil zur verstellbaren Regulierung eines Fluidstroms innerhalb des Türantriebs. Nachteilig an diesem Regulierventil ist, dass es viele Bauteile aufweist und aufwändige Bearbeitungsschritte in der Fertigung erfordert. Hierdurch ist es weder kostengünstig noch einfach herstellbar.

Die EP 2 730 822 A2 offenbart einen Türantrieb mit einem Regulierventil.

Damit ist es die Aufgabe der Erfindung, einen Türantrieb anzugeben, der besonders einfach herstellbar ist. Ferner ist es die Aufgabe der Erfindung, einen Türantrieb anzugeben, der besonders günstig herstellbar ist.

Die zuvor hergeleitete und aufgezeigte Aufgabe ist ausgehend von dem eingangs beschriebenen.

Türantrieb dadurch gelöst, dass wenigstens einer der Dichtabschnitte durch wenigstens eine radiale Verdickung gebildet wird, wobei der Regulierabschnitt durch wenigstens eine radiale Verjüngung des Regulierventils gebildet wird. Vorteilhafte Weiterbildungen der Erfindung sind in den abhängigen Ansprüchen, der Beschreibung und in den Figuren angegeben. Radiale Verdickung bedeutet hierbei, dass der Durchmesser des Regulierventils an dieser Stelle größer ist als der Durchmesser, der entlang der Rotationsachse gesehen direkt benachbarten Bereiche. Radiale Verjüngung bedeutet hierbei, dass der Durchmesser des Regulierventils an dieser Stelle kleiner ist als der Durchmesser, der entlang der Rotationsachse gesehen direkt benachbarten Bereiche. Erfindungsgemäß ist vorgesehen, dass das Regulierventil wenigstens zwei Angriffe aufweist. Hierdurch wird erreicht, dass das Regulierventil einfach, mit einem Werkzeug oder mit der Hand, bedienbar ist. Dabei ist jeweils ein Angriff oder wenigstens einer der Angriffe an einem der Enden angeordnet. Hierdurch wird erreicht, dass jeder Angriff gut zugänglich ist und das Regulierventil von beiden Enden her bedienbar ist. Erfindungsgemäß ist vorgesehen, dass das Regulierventil eine Spritzgussteil oder ein Drehteil ist.

Ferner kann vorgesehen sein, dass die radiale Verdickung oder wenigstens eine der radialen Verdickungen einstückig mit dem Regulierventil ausgebildet ist. Hierdurch wird erreicht, dass das Regulierventil einfach und günstig herstellbar ist.

Ferner kann vorgesehen sein, dass die Verjüngung oder wenigstens eine der Verjüngungen einen in Richtung der Rotationsachse symmetrischen Querschnitt aufweist. Hierdurch wird erreicht, dass das Regulierventil einfach und günstig herstellbar ist.

Ferner kann vorgesehen sein, dass das Regulierventil mittels wenigstens einer der Angriffe um die Rotationsachse rotierbar ist.

Ferner kann vorgesehen sein, dass das Regulierventil wenigstens ein Gewinde aufweist.

Ferner kann vorgesehen sein, dass das Gewinde oder wenigstens eines der Gewinde koaxial zur Rotationsachse ausgebildet ist.

Ferner kann vorgesehen sein, dass das Gewinde oder wenigstens eines der Gewinde an einem der Enden angeordnet ist.

Ferner kann vorgesehen sein, dass wenigstens ein Ende sowohl ein Gewinde als auch einen Angriff aufweist.

Ferner kann vorgesehen sein, dass das Regulierventil an einem der Enden einen Führungsabschnitt aufweist.

Ferner kann vorgesehen sein, dass der Führungsabschnitt einen geringeren Durchmesser als ein anderes Ende aufweist.

Ferner kann vorgesehen sein, dass die radiale Verdickung oder wenigstens eine der radialen Verdickungen rotationssymmetrisch um die Rotationsachse verläuft. Hierdurch wird erreicht, dass die Verdickungen zuverlässig ihre Dichtfunktion erfüllen.

Ferner kann vorgesehen sein, dass die Verjüngung oder wenigstens eine der Verjüngungen rotationssymmetrisch um die Rotationsachse verläuft. Hierdurch wird erreicht, dass die Regulierwirkung der Verjüngung unabhängig von einer reinen Rotation des Regulierventils um seine Rotationsachse ist.

Ferner kann vorgesehen sein, dass wenigstens einer der Dichtabschnitte durch mehrere radiale Verdickungen gebildet wird, wobei die Verdickungen entlang der Rotationsachse voneinander beabstandet sind. Hierdurch wird erreicht, dass die Verdickungen besonders zuverlässig ihre Dichtfunktion erfüllen.

Ferner kann vorgesehen sein, dass das Regulierventil mittels des einen Gewindes oder mittels wenigstens einer der Gewinde in einen Türantrieb einschraubbar ist. Hierdurch wird erreicht, dass das Regulierventil in einem Türantrieb sicher verstellbar und führbar ist.

Ferner kann vorgesehen sein, dass das Regulierventil aus Kunststoff besteht. Hierdurch wird erreicht, dass das Regulierventil einfach und günstig herstellbar ist.

Ferner kann vorgesehen sein, dass der Kunststoff ein Polyamid ist. Hierdurch wird erreicht, dass das Regulierventil einfach und günstig herstellbar ist.

Ferner kann vorgesehen sein, dass der Kunststoff Fasern enthält.

Ferner kann vorgesehen sein, dass die Fasern Glasfasern aufweisen.

Ferner kann vorgesehen sein, dass die Fasern 5-50 Massenprozent, vorzugsweise 20-40 Massenprozent, besonders bevorzugt 25-35 Massenprozent des Kunststoffs ausmachen.

Ferner kann vorgesehen sein, dass das Regulierventil wenigstens eine umlaufende Dichtringnut aufweist.

Ferner kann vorgesehen sein, dass das Regulierventil wenigstens einen Dichtring aufweist.

Ferner kann vorgesehen sein, dass der Dichtring oder wenigstens einer der Dichtringe in der Dichtringnut oder einer der Dichtringnuten angeordnet ist.

Ferner kann vorgesehen sein, dass die Dichtringnut oder wenigstens eine der Dichtringnuten zwischen einem Ende und dem nächstgelegenen Dichtabschnitt angeordnet ist.

Ferner kann vorgesehen sein, dass das Regulierventil wenigstens zwei Dichtringe aufweist, wobei wenigstens ein Dichtring einen geringeren Durchmesser aufweist als ein anderer Dichtring. Hierdurch wird erreicht, dass der Dichtring mit dem geringeren Durchmesser beim Einsetzen des Regulierventils in einen Türantrieb vor Beschädigungen, insbesondere durch ein Aufnahmegewinde einer Regulierventilaufnahme, geschützt ist. Hierbei bezeichnet der Durchmesser eines Dichtrings den äußeren Durchmesser dieses Dichtrings.

Ferner kann vorgesehen sein, dass der Türantrieb wenigstens eine Regulierventilaufnahme aufweist, wobei das Regulierventil oder wenigstens eines der Regulierventile in einer Regulierventilaufnahme des Türantriebs aufgenommen ist. Hierdurch wird erreicht, dass das Regulierventil sicher im Türantrieb aufgenommen ist.

Ferner kann vorgesehen sein, dass wenigstens einer der Dichtabschnitte einen größeren Durchmesser als der Durchmesser der zugeordneten Regulierventilaufnahme aufweist. Hierdurch wird erreicht, dass der Dichtabschnitt bzw. wenigstens einer der Dichtabschnitte in der jeweils zugeordneten Regulierventilaufnahme zuverlässig seine Dichtfunktion erfüllen kann. Dies geschieht dadurch, dass der Dichtabschnitt bzw. wenigstens einer der Dichtabschnitte elastisch, das heißt reversibel, verformt wird. Somit schmiegt sich der Dichtabschnitt an die dem Regulierventil zugewandte Oberfläche der Regulierventilaufnahme an.

Ferner kann vorgesehen sein, dass der Türantrieb eine Längsachse aufweist, wobei die Längsachse durch die Bewegungsrichtung eines im Türantrieb angeordneten Kolbens oder einer im Türantrieb angeordneten Feder definiert wird, wobei das Regulierventil oder wenigstens eines der Regulierventile senkrecht zur Längsachse angeordnet ist. Hierdurch wird erreicht, dass der Türantrieb besonders einfach herstellbar ist.

Ferner kann vorgesehen sein, dass wenigstens eine Regulierventilaufnahme eine Führungsabschnittaufnahme aufweist, wobei die Führungsabschnittaufnahme den Führungsabschnitt des zugeordneten Regulierventils aufnimmt. Hierdurch wird erreicht, dass der Türantrieb besonders einfach herstellbar ist. Hierdurch wird ferner erreicht, dass das zugeordnete Regulierventil sicher in der Regulierventilaufnahme geführt ist.

Ferner kann vorgesehen sein, dass die Regulierventilaufnahme durch eine Stufenbohrung gebildet wird, wobei die Stufenbohrung in Längsrichtung wenigstens zwei Abschnitte aufweist, wobei einer der Abschnitte die Führungsabschnittaufnahme bildet. Hierdurch wird erreicht, dass der Türantrieb besonders einfach herstellbar ist.

Ferner kann vorgesehen sein, dass der Abschnitt mit dem geringsten Durchmesser die Führungsabschnittaufnahme bildet.

Ferner kann vorgesehen sein, dass der Türantrieb eine Abtriebswelle aufweist, wobei die Abtriebswelle im Türantrieb gelagert ist, wobei die Abtriebswelle um eine Abtriebsachse drehbar ist, wobei die Abtriebswelle wenigstens einen Anschluss aufweist, wobei der Anschluss oder wenigstens einer der Anschlüsse dem Anschließen eines Gestänges dient.

Ferner kann vorgesehen sein, dass das Regulierventil oder wenigstens eines der Regulierventile senkrecht zur Abtriebsachse angeordnet ist. Hierdurch wird erreicht, dass das Regulierventil bzw. wenigstens eines der Regulierventile in der an der Tür montierten Lage gut zugänglich ist.

Ferner kann vorgesehen sein, dass das Regulierventil oder wenigstens eines der Regulierventile in dem Türantrieb wenigstens zwei Hydraulikkanäle verbindet. Hierdurch wird erreicht, dass der Türantrieb besonders einfach herstellbar ist.

Ferner kann vorgesehen sein, dass das Regulierventil oder wenigstens eines der Regulierventile zur Steuerung des Hydraulikstroms zwischen den Hydraulikkanälen dient. Hierdurch wird erreicht, dass der Hydraulikstrom besonders zuverlässig steuerbar ist.

Ferner kann vorgesehen sein, dass die Hydraulikkanäle senkrecht zur Rotationsachse verlaufen. Hierdurch wird erreicht, dass der Türantrieb besonders einfach herstellbar ist.

Ferner kann vorgesehen sein, dass die Hydraulikkanäle koaxial verlaufen. Hierdurch wird erreicht, dass der Türantrieb besonders einfach herstellbar ist.

Ferner kann vorgesehen sein, dass wenigstens einer der Dichtabschnitte aus einem weicheren Material besteht als die jeweils zugeordnete Regulierventilaufnahme. Hierdurch wird erreicht, dass sich der Dichtabschnitt bzw. wenigstens einer der Dichtabschnitte in der jeweils zugeordneten Regulierventilaufnahme durch elastische Verformung an den Innendurchmesser der Regulierventilaufnahme anpasst.

Ferner kann vorgesehen sein, dass die Regulierventilaufnahme oder wenigstens eine der Regulierventilaufnahmen wenigstens ein Aufnahmegewinde aufweist, wobei das Aufnahmegewinde oder wenigstens eines der Aufnahmegewinde mit einem zugeordneten Gewinde des zugeordneten Regulierventils zusammenwirkt. Hierdurch wird erreicht, dass das Regulierventil entlang seiner Rotationsachse bewegbar ist.

Ferner kann vorgesehen sein, dass der Türantrieb ein Gestänge aufweist, wobei das Gestänge mit der Abtriebswelle des Türantriebs verbunden ist, wobei das Gestänge der Kraftübertragung zwischen dem Türantrieb und einem Türflügel oder Türrahmen dient.

Ferner kann vorgesehen sein, dass das Gestänge ein Scherengestänge ist.

Ferner kann vorgesehen sein, dass das Gestänge ein Gleitschienengestänge ist.

Ferner kann vorgesehen sein, dass die Abtriebswelle auf zwei gegenüberliegenden Seiten aus dem Türantrieb ragt, wobei die Abtriebswelle an beiden Seiten einen Anschluss aufweist. Je nach Montageausrichtung des Türantriebs kann zum Beispiel einer der beiden Anschlüsse zum Einsatz kommen und wird entsprechend mit dem Gestänge verbunden. Der andere Anschluss bleibt ungenutzt.

Die Erfindung wird nachfolgend anhand von Ausführungsbeispielen näher erläutert. Technische Merkmale mit gleicher Funktion sind in den Figuren mit identischen Bezugszeichen versehen. Es zeigen:
Fig. 1a und 1b ein Ausführungsbeispiel eines Regulierventils 1 eines erfindungsgemäßen Türantriebs 2 und
Fig. 2 den erfindungsgemäßen Türantrieb 2.

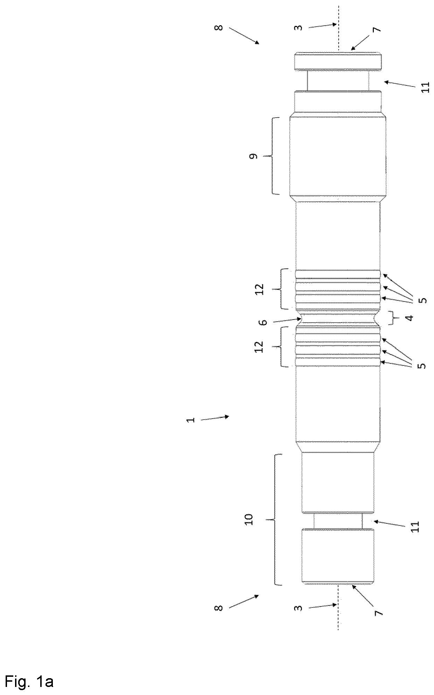

Fig. 1a zeigt ein Ausführungsbeispiel eines Regulierventils 1 eines erfindungsgemäßen Türantriebs 2, wobei das Regulierventil 1 eine Rotationsachse 3 aufweist, wobei das Regulierventil 1 wenigstens zwei Enden 8 aufweist, wobei das Regulierventil 1 wenigstens zwei Dichtabschnitte 12 aufweist, wobei das Regulierventil 1 einen Regulierabschnitt 4 aufweist, wobei der Regulierabschnitt 4 zwischen den Dichtabschnitten 12 angeordnet ist.

Beide Dichtabschnitte 12 werden durch je drei radiale Verdickungen 5 gebildet. Die radialen Verdickungen 5 sind entlang der Rotationsachse 3 voneinander beabstandet. Der Regulierabschnitt 4 wird durch eine radiale Verjüngung 6 gebildet. Die radialen Verdickungen 5 sind einstückig mit dem Regulierventil 1 ausgebildet. Die radialen Verdickungen 5 verlaufen rotationssymmetrisch um die Rotationsachse 3. Die Verjüngung 6 verläuft ebenfalls rotationssymmetrisch um die Rotationsachse 3. Die Verjüngung 6 weist in Richtung der Rotationsachse 3 einen symmetrischen Querschnitt auf.

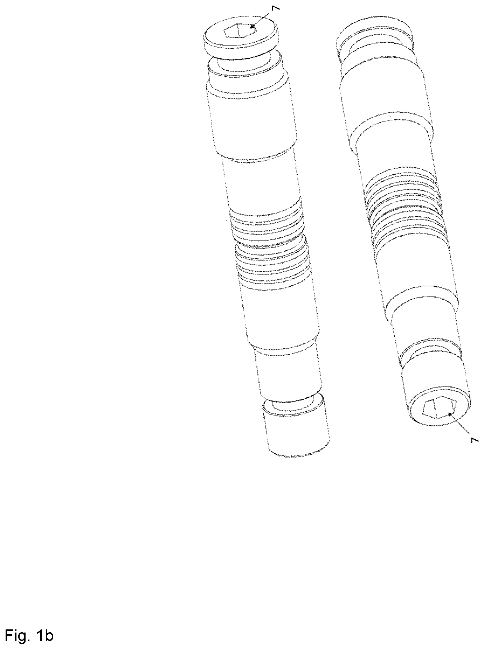

Das Regulierventil 1 weist 2 Angriffe 7 auf. Das Regulierventil 1 weist zwei Enden 8 auf. An jedem Ende 8 ist ein Angriff 7 angeordnet. Somit weist jedes Ende 8 einen Angriff 7 auf. In der Figur 1b ist das Regulierventil 1 der Figur 1a in perspektivischer Ansicht dargestellt, so dass die Angriffe 7 besser sichtbar sind. Die Angriffe 7 werden jeweils durch einen Innensechskant gebildet.

Das Regulierventil 1 weist ein Gewinde 9 auf. Das Gewinde 9 ist am rechten der beiden Enden 8 des Regulierventils 1 angeordnet. Das rechte der beiden Enden 8 weist somit sowohl einen Angriff 7 als auch ein Gewinde 9 auf. Das Gewinde 9 ist koaxial zur Rotationsachse 3 ausgebildet.

Das Regulierventil 1 weist einen Führungsabschnitt 10 auf. Der Führungsabschnitt 10 ist am linken der beiden Enden 8 angeordnet. Der Führungsabschnitt 10 weist einen geringeren Durchmesser als das rechte der beiden Enden 8 auf.

Das Regulierventil 1 weist zwei umlaufende Dichtringnuten 11 auf. Die Dichtringnuten 11 dienen der Aufnahme von nicht dargestellten Dichtringen. Die Dichtringnuten 11 sind je zwischen einem der Enden 8 und dem nächstgelegenen Dichtabschnitt 12 angeordnet.

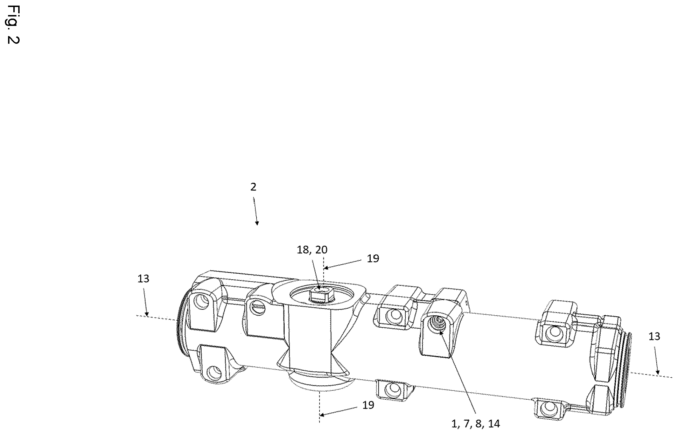

Mittels des Gewindes 9 ist das Regulierventil 1 in eine Regulierventilaufnahme 14 eines Türantriebs 2 einschraubbar (siehe Fig. 2). Hierzu weist die Regulierventilaufnahme 14 ein Aufnahmegewinde auf. Über die Angriff 7 ist das Regulierventil 1 um seine Rotationsachse 3 rotierbar. Bei einer Rotation des Regulierventils 1 in der Regulierventilaufnahme 14 wird das Regulierventil 1 entlang seiner Rotationsachse 3 verschoben. Hierbei verschiebt sich das Regulierventil 1 auch relativ zu im Türantrieb 1 angeordneten Hydraulikkanälen. Je nach Position des Regulierventils 1 im Türantrieb 1 kann Hydraulikfluid entlang der Verjüngung 6 des Regulierventils 1 strömen oder wird blockiert.

Fig. 2 zeigt ein Ausführungsbeispiel des erfindungsgemäßen Türantriebs 2. Der Türantrieb 2 weist eine Regulierventilaufnahme 14 auf. In der Regulierventilaufnahme 14 ist ein erfindungsgemäßes Regulierventil 1 angeordnet. Ein Ende 8 des Regulierventils 1 Ist in der Figur 2 sichtbar. Das Ende 8 des Regulierventils 1 weist einen Angriff 7 auf. Der Angriff 7 wird durch einen Innensechskant gebildet.

Der Türantrieb 2 weist eine Längsachse 13 auf. Der Türantrieb 2 weist eine Abtriebswelle 18 auf. Die Abtriebswelle 18 Ist im Türantrieb 2 gelagert. Die Abtriebswelle 18 verläuft senkrecht zur Längsachse 13. Die Abtriebswelle 18 ist um eine Abtriebsachse 19 drehbar. Die Abtriebsachse 19 verläuft senkrecht zur Längsachse 13. Die Abtriebswelle 18 ragt an der Oberseite und an der Unterseite des Türantriebs 1 aus dem Türantrieb 1 heraus. Die Abtriebswelle 18 weist an ihren beiden Enden einen Anschluss 20 auf. In der Figur ist lediglich der obere Anschluss 20 sichtbar. Die Anschlüsse 20 dienen dem Anschließen eines nicht dargestellten Gestänges. Das Regulierventil 1 ist senkrecht zur Abtriebsachse 19 angeordnet.

### Bezugszeichenliste

| | |
|---|---|
| Regulierventil | 1 |
| Türantrieb | 2 |
| Rotationsachse | 3 |
| Regulierabschnitt | 4 |
| Verdickung | 5 |
| Verjüngung | 6 |
| Angriff | 7 |
| Ende | 8 |
| Gewinde | 9 |
| Führungsabschnitt | 10 |
| Dichtringnut | 11 |
| Dichtabschnitt | 12 |
| Längsachse | 13 |
| Regulierventilaufnahme | 14 |
| Abtriebswelle | 18 |
| Abtriebsachse | 19 |
| Anschluss | 20 |

## Patentansprüche

1. Türantrieb (2), wobei der Türantrieb (2) ein Regulierventil (1) aufweist, wobei das Regulierventil (1) eine Rotationsachse (3) aufweist, wobei das Regulierventil (1) wenigstens zwei Enden (8) aufweist, wobei das Regulierventil (1) wenigstens zwei Dichtabschnitte (12) aufweist, wobei das Regulierventil (1) einen Regulierabschnitt (4) aufweist, wobei der Regulierabschnitt (4) zwischen den Dichtabschnitten (12) angeordnet ist,
wobei wenigstens einer der Dichtabschnitte (12) durch wenigstens eine radiale Verdickung (5) gebildet wird,
wobei der Regulierabschnitt (4) durch wenigstens eine radiale Verjüngung (6) des Regulierventils (1) gebildet wird,
**dadurch gekennzeichnet, dass** jedes Ende (8) wenigstens einen Angriff (7) zur Bedienung mit einem Werkzeug oder mit der Hand aufweist und dass das Regulierventil (1) ein Spritzgussteil oder ein Drehteil ist.

2. Türantrieb (2) nach Anspruch 1, **dadurch gekennzeichnet, dass** die radiale Verdickung (5) oder wenigstens eine der radialen Verdickungen (5) einstückig mit dem Regulierventil (1) ausgebildet ist.

3. Türantrieb (2) nach einem der vorhergehenden Ansprüche, **dadurch gekennzeichnet, dass** wenigstens einer der Dichtabschnitte (12) durch mehrere, radiale Verdickungen (5) gebildet wird, wobei die Verdickungen (5) entlang der Rotationsachse (3) voneinander beabstandet sind.

4. Türantrieb (2) nach einem der vorhergehenden Ansprüche, **dadurch gekennzeichnet, dass** das Regulierventil (1) aus Kunststoff besteht.

5. Türantrieb (2) nach einem der vorhergehenden Ansprüche, **dadurch gekennzeichnet, dass** der Türantrieb (2) wenigstens eine Regulierventilaufnahme (14) aufweist, wobei das Regulierventil (1) in einer Regulierventilaufnahme (14) des Türantriebs (2) aufgenommen ist.

6. Türantrieb (2) nach Anspruch 5, **dadurch gekennzeichnet, dass** wenigstens einer der Dichtabschnitte (12) einen größeren Außendurchmesser als der Innendurchmesser der zugeordneten Regulierventilaufnahme (14) aufweist.

7. Türantrieb (2) nach einem der vorhergehenden Ansprüche, **dadurch gekennzeichnet, dass** der Türantrieb (2) eine Abtriebswelle (18) aufweist, wobei die Abtriebswelle (18) im Türantrieb (2) gelagert ist, wobei die Abtriebswelle (18) um eine Abtriebsachse (19) drehbar ist, wobei die Abtriebswelle (18) wenigstens einen Anschluss (20) aufweist, wobei der wenigstens eine Anschluss (20) dem Anschließen eines Gestänges dient.

8. Türantrieb (2) nach Anspruch 7, **dadurch gekennzeichnet, dass** das Regulierventil (1) senkrecht zur Abtriebsachse (19) angeordnet ist.

9. Türantrieb (2) nach einem der vorhergehenden Ansprüche, **dadurch gekennzeichnet, dass** das Regulierventil (1) in dem Türantrieb (2) wenigstens zwei Hydraulikkanäle verbindet.

10. Türantrieb (2) nach Anspruch 9, **dadurch gekennzeichnet, dass** das Regulierventil (1) zur Steuerung des Hydraulikstroms zwischen den Hydraulikkanälen dient.

11. Türantrieb (2) nach einem der vorhergehenden Ansprüche, **dadurch gekennzeichnet, dass** wenigstens einer der Dichtabschnitte (12) aus einem weicheren Material besteht als die jeweils zugeordnete Regulierventilaufnahme (14).

## Claims

1. A door drive (2), wherein the door drive (2) has a regulating valve (1), wherein the regulating valve (1) has an axis of rotation (3), wherein the regulating valve (1) has at least two ends (8), wherein the regulating valve (1) has at least two sealing sections (12), wherein the regulating valve (1) has a regulating section (4), wherein the regulating section (4) is arranged between the sealing sections (12),
wherein at least one of the sealing sections (12) is formed by at least one radial thickening (5),
wherein the regulating section (4) is formed by at least one radial tapering (6) of the regulating valve (1),
**characterised in that** each end (8) has at least one grip (7) for operation with a tool or by hand and **in that** the regulating valve (1) is an injection-moulded part or a turned part.

2. The door drive (2) according to claim 1, **characterised in that** the radial thickening (5) or at least one of the radial thickenings (5) is formed integrally with the regulating valve (1).

3. The door drive (2) according to any one of the preceding claims, **characterised in that**at least one of the sealing sections (12) is formed by a plurality of radial thickenings (5), wherein the thickenings (5) are spaced apart from one another along the axis of rotation (3).

4. The door drive (2) according to any one of the preceding claims, **characterised in that** the regulating valve (1) is made of plastic.

5. The door drive (2) according to any one of the preceding claims, **characterised in that** the door drive (2) has at least one regulating valve receptacle (14), wherein the regulating valve (1) is received in a regulating valve receptacle (14) of the door drive (2).

6. The door drive (2) according to claim 5, **characterised in that** at least one of the sealing sections (12) has a larger outer diameter than the inner diameter of the associated regulating valve receptacle (14).

7. The door drive (2) according to any one of the preceding claims, **characterised in that** the door drive (2) has an output shaft (18), wherein the output shaft (18) is mounted in the door drive (2), wherein the output shaft (18) is rotatable about an output axis (19), wherein the output shaft (18) has at least one connection (20), wherein the at least one connection (20) serves to connect a rod.

8. The door drive (2) according to claim 7, **characterised in that** the regulating valve (1) is arranged perpendicular to the output axis (19).

9. The door drive (2) according to any one of the preceding claims, **characterised in that** the regulating valve (1) in the door drive (2) connects at least two hydraulic channels.

10. The door drive (2) according to claim 9, **characterised in that** the regulating valve (1) controls the hydraulic flow between the hydraulic channels.

11. The door drive (2) according to any one of the preceding claims, **characterised in that** at least one of the sealing sections (12) consists of a softer material than the respectively associated regulating valve receptacle (14).

## Revendications

1. Entraînement de porte (2), dans lequel l'entraînement de porte (2) présente une soupape de régulation (1), dans lequel la soupape de régulation (1) présente un axe de rotation (3), dans lequel la soupape de régulation (1) présente au moins deux extrémités (8), dans lequel la soupape de régulation (1) présente au moins deux sections d'étanchéité (12), dans lequel la soupape de régulation (1) présente une section de régulation (4), dans lequel la section de régulation (4) est agencée entre les sections d'étanchéité (12),
dans lequel au moins l'une des sections d'étanchéité (12) est formée par au moins un épaississement radial (5),
dans lequel la section de régulation (4) est formée par au moins un amincissement radial (6) de la soupape de régulation (1),
**caractérisé en ce que** chaque extrémité (8) présente au moins une prise (7) pour une utilisation avec un outil ou à la main et que la soupape de régulation (1) est une pièce moulée par injection ou une pièce tournée.

2. Entraînement de porte (2) selon la revendication 1, **caractérisé en ce que** l'épaississement radial (5) ou au moins l'un des épaississements radiaux (5) est formé d'une seule pièce avec la soupape de régulation (1).

3. Entraînement de porte (2) selon l'une des revendications précédentes, **caractérisé en ce qu'**au moins l'une des sections d'étanchéité (12) est formée par plusieurs épaississements radiaux (5), dans lequel les épaississements (5) sont espacés les uns des autres le long de l'axe de rotation (3).

4. Entraînement de porte (2) selon l'une des revendications précédentes, **caractérisé en ce que** la soupape de régulation (1) est constituée de matière plastique.

5. Entraînement de porte (2) selon l'une des revendications précédentes, **caractérisé en ce que** l'entraînement de porte (2) présente au moins un logement de soupape de régulation (14), dans lequel la soupape de régulation (1) est logée dans un logement de soupape de régulation (14) de l'entraînement de porte (2).

6. Entraînement de porte (2) selon la revendication 5, **caractérisé en ce qu'**au moins l'une des sections d'étanchéité (12) présente un diamètre extérieur plus grand que le diamètre intérieur du logement de soupape de régulation (14) associé.

7. Entraînement de porte (2) selon l'une des revendications précédentes, **caractérisé en ce que** l'entraînement de porte (2) présente un arbre de sortie (18), dans lequel l'arbre de sortie (18) est monté dans l'entraînement de porte (2), dans lequel l'arbre de sortie (18) peut tourner autour d'un axe de sortie (19), dans lequel l'arbre de sortie (18) présente au moins un raccord (20), dans lequel l'au moins un raccord (20) sert à raccorder une tringlerie.

8. Entraînement de porte (2) selon la revendication 7, **caractérisé en ce que** la soupape de régulation (1) est agencée perpendiculairement à l'axe de sortie (19).

9. Entraînement de porte (2) selon l'une des revendications précédentes, **caractérisé en ce que** la soupape de régulation (1) dans l'entraînement de porte (2) relie au moins deux canaux hydrauliques.

10. Entraînement de porte (2) selon la revendication 9, **caractérisé en ce que** la soupape de régulation (1) sert à contrôler le débit hydraulique entre les canaux hydrauliques.

11. Entraînement de porte (2) selon l'une des revendications précédentes, **caractérisé en ce qu'**au moins l'une des sections d'étanchéité (12) est constituée d'un matériau plus souple que le logement de soupape de régulation (14) respectivement associé.
